# EUROPÄISCHE PATENTSCHRIFT

(11) **EP 1 418 077 B1**
(45) Veröffentlichungstag und Bekanntmachung des Hinweises auf die Patenterteilung: **13.12.2006**
(21) Anmeldenummer: 03024190.5
(22) Anmeldetag: 21.10.2003
(51) Int. Cl.: B60J 10/00

(54) **Einleger für eine Kraftfahrzeug-Fensterdichtung**
Corner piece for vehicle seal
Pièce d'angle pour étanchéité de véhicule

(30) Priorität: 06.11.2002 DE 10251604
(43) Veröffentlichungstag der Anmeldung: 12.05.2004
(73) Patentinhaber: VERITAS AG, 63571 Gelnhausen (DE)
(72) Erfinder: Hattas, Dirk, 63584 Gründau-Rothenbergen (DE); Esswein, Maik, 85057 Ingolstadt (DE); Greiss, Oliver, 86899 Landsberg / Lech (DE)
(74) Vertreter: Schickedanz, Willi

(56) Entgegenhaltungen:
- EP-A- 1 245 421
- DE-A- 19 961 873
- US-B1- 6 240 677
- PATENT ABSTRACTS OF JAPAN vol. 018, no. 292 (M-1615), 3. Juni 1994 (1994-06-03) & JP 06 055931 A (NIFCO INC), 1. März 1994 (1994-03-01)

## Beschreibung

Die Erfindung betrifft einen Einleger nach dem Oberbegriff des Patentanspruchs 1.

Kraftfahrzeugfenster stoßen im geschlossenen Zustand oben und an den Seiten an Gummidichtungen. Diese Gummidichtungen sind profiliert und werden bei der Montage eines Kraftfahrzeugs mit entsprechenden Ausnehmungen bzw. Vorsprüngen eines Aggregatträgers eines Kraftfahrzeugrahmens verbunden. Besonders problematisch sind hierbei die Ecken eines Fensterrahmens, etwa an der A-, B- oder C-Säule. Die ursprünglich geraden, strangpressgezogenen Metallprofile oder Aggregatträger, in welche die Gummidichtungen eingeclipst werden sollen, müssen streckgebogen werden, um in die Ecke der Karosserie zu passen. Hierdurch verändert sich der Querschnitt des Profils im gebogenen Bereich im Vergleich zum nicht gebogenen Bereich, sodass ein Einclipsen der Gummidichtung in den Aggregatträger erschwert oder unmöglich wird. Der Dichtungsgummi ist in der Regel nicht kontinuierlich durch die Ecke geführt, sondern besteht im Eckbereich aus zwei Teilen, die miteinander durch Vulkanisieren verbunden sind. Hierdurch wird die Fensterecke zu einer Schwachstelle hinsichtlich des Diebstahlschutzes, weil rein über das Gummiprofil eine hinreichende Befestigung nicht möglich ist. Üblicherweise werden die Gummiprofile durch Verschrauben oder Verkleben fixiert. Verschraubte Gummiprofile sehen jedoch nicht sehr schön aus, weil man z. B. beim Öffnen einer Autotür die Schraube sieht, und verklebte Profile erfordern zusätzliche Arbeitsschritte.

Um ein Gummiprofil ohne Verschrauben montieren zu können, ist es bereits bekannt, dieses Gummiprofil an dieser Stelle mit einem Verrastelement zu versehen, das in das Gummiprofil integriert ist (WO 01/89870 A1). Dieses Verrastelement weist eine elastisch verschwenkbare Zunge auf, die bei der Montage einen zugeordneten Vorsprung hintergreift. Für die Befestigung von Gummiprofilen an profilierten Aggregatträgem ist dieses Verrastelement jedoch nicht geeignet.

Es ist weiterhin eine Anordnung einer feststehenden Fensterscheibe an einem Kraftfahrzeug bekannt, an deren Rand eine umlaufende und aus gummielastischem Material bestehende Dichtung festhaftend angeformt ist (DE 36 05 750 C2). In diese Dichtung sind aus einem Aufnahmeteil und einem Halteteil bestehende Befestigungselemente abschnittsweise eingebettet. Das Aufnahmeteil weist ein U-förmiges, den Scheibenrand umgebendes Querschnittsprofil auf, dessen beide Schenkel zusammen mit dem Steg Wandungsabschnitte bilden, während das Halteteil des Befestigungselements jeweils an einem mit zugeordneten Ausnehmungen versehenen Halteflansch eines Fensterrahmens festgelegt ist.

Hierbei weist wenigstens ein Wandungsabschnitt des Aufnahmeteils mindestens eine, von seiner Anlagefläche zurückgesetzte Gummi-Aufnahmetasche auf.

Ferner ist eine Eckeinheit für einen Scheibenlaufkanal bekannt, die ein längliches Rahmenelement und Lappenelemente aufweist, die vom Rahmenelement vorstehen und einem Verstärkungselement der Scheibenlaufkanalstreifen zugeordnet sind (DE 39 12 897 A1). Das Rahmenelement und die Lappenelemente befestigen hierbei die beiden Laufstreifen.

Schließlich ist auch noch aus der gattungsgemäßen US 6 240 677 B1 (DE 698 13 772 T) eine Dichtungs- oder Führungsanordnung zum Abdichten oder Führen einer Ecke einer Glasscheibe in dem Rahmen einer Fensteröffnung bekannt, die ein verstärktes Eckstück aufweist. Dieses verstärkte Eckstück besitzt ein äußeres Profil, das auf den Winkel der Ecke passt, sowie einen gebogenen inneren Bereich, welcher die Ecke überbrückt. Außerdem weist das verstärkte Eckstück Verriegelungsmittel für dessen verschließbares Befestigen auf dem Rahmen auf. Im Einzelnen besteht das Eckstück aus einer Plattform mit an ihren Außenseiten integrierten Kanten und mit auf ihrer Unterseite integrierten Klemmen. Einige dieser Klemmen weisen hakenförmige Teile auf, die an der scharfen Ecke nach außen zeigen. Andere Klemmen besitzen nach innen zeigende Hakenteile. Damit die Hakenteile in den gebogenen Teil eines Aluminium-Extrusionsteils einrasten können, muss dieser Extrusionsteil mit einer besonders geformten Rinne versehen werden.
Der Erfindung liegt die Aufgabe zugrunde, einen Einleger für ein Gummiprofil zu schaffen, mit dem das Gummiprofil durch Einclipsen mit einem profilierten Aggregatträger auch in dessen gekrümmten Bereichen verbunden werden kann, ohne dass der Aggregatträger über einen großen Bereich mit besonders ausgebildeten Rinnen versehen werden muss.

Diese Aufgabe wird gemäß den Merkmalen des Patentanspruchs 1 gelöst.

Die Erfindung betrifft somit einen Einleger für eine Kraftfahrzeug-Fensterdichtung, der mit einem am Kraftfahrzeug befindlichen Profil verrastbar ist. Dieser Einleger weist etwa in seiner Mitte einen bügelähnlichen Vorsprung auf. Dieser bügelähnliche Vorsprung untergreift eine Nase des Profils. Da der Einleger in eine Gummidichtung integriert ist, aus der nur der bügelähnliche Vorsprung herausschaut, wird die Gummidichtung fest mit dem Profil verkoppelt. Eine Ablösung der Gummidichtung von diesem Profil ist nicht möglich.

Der mit der Erfindung erzielte Vorteil besteht insbesondere darin, dass der Einleger, der in den Dichtungsgummi integriert ist, nur einen Verrastungspartner am Aggregatträger benötigt. Eine Rastnase des Aggregatträgers ist hierbei leicht nach innen gestellt. Da der Einleger eine entsprechende Ausgestaltung besitzt, entsteht bei der Montage eine formschlüssige Verbindung, die das Abziehen der Dichtung vom Aggregatträger verhindert. Die Demontage des Dichtgummis ist nur durch den Bruch des Einlegers möglich, was auf eine große Haltekraft hindeutet. Der Einleger oder "Clipse" kann bei einvulkanisierter, eingeklebter oder eingesteckter Positionierung in eine Gummidichtung sicherer als beim Verschrauben in die richtige Halteposition gebracht werden. Beim gewaltsamen Herausziehen der Gummidichtung wirkt kein Kippmoment; vielmehr sind die Zugkraft und die Haltekraft genau in einer Ebene. Ein gewaltsames Öffnen des Fensters eines Kraftfahrzeugs ist dadurch ausgeschlossen. Durch die "Schaukelform" des Einlegers wird eine Verhakung mit dem Aggregatträger über die ganze Länge des Clips gewährleistet, und zwar auch an den gebogenen Stellen des Aggregatträgers.

Ein Ausführungsbeispiel der Erfindung ist in den Zeichnungen dargestellt und wird im Folgenden näher beschrieben. Es zeigen:
- Fig. 1: ein Kraftfahrzeug mit mehreren Säulen;
- Fig. 2: eine vergrößerte Darstellung der B- und C-Säulenbereiche des Kraftfahrzeugs;
- Fig. 3: einen Querschnitt durch einen Aggregatträger für eine Gummidichtung;
- Fig. 4: eine Ansicht A auf einen Aggregatträger, bei der man diejenigen Bereiche erkennt, in denen eine Gummidichtung eingeklemmt wird;
- Fig. 5: eine Ansicht B von oben auf den Aggregatträger;
- Fig. 6: eine Ansicht auf die Außenseite einer Gummidichtung;
- Fig. 7: eine um 180 Grad gedrehte Ansicht der Gummidichtung nach Fig. 6;
- Fig. 8: eine Ansicht C auf das Ende einer Gummidichtung;
- Fig. 9: eine Draufsicht auf einen Einleger;
- Fig. 10: eine Ansicht von oben auf den Einleger gemäß Fig. 9;
- Fig. 11: eine gegenüber der Fig. 10 um 180 Grad gedrehte Darstellung des Einlegers;
- Fig. 12: eine Seitenansicht des Einlegers;
- Fig. 13: eine perspektivische Darstellung des Einlegers;
- Fig. 14: eine mit einem Aggregatträger im geraden Bereich verbundene Gummidichtung;
- Fig. 15: eine mit einem Aggregatträger im gekrümmten Bereich verbundene Gummidichtung;
- Fig. 16: einen Schnitt durch einen Aggregatträger und eine Gummidichtung im Mittenbereich eines Vorsprungs eines Einlegers;
- Fig. 17: einen Schnitt wie Fig. 16, jedoch im Randbereich des Vorsprungs des Einlegers;
- Fig. 18: eine erste Ansicht eines Aggregatträgers mit Einleger;
- Fig. 19: eine zweite Ansicht eines Aggregatträgers mit Einleger.

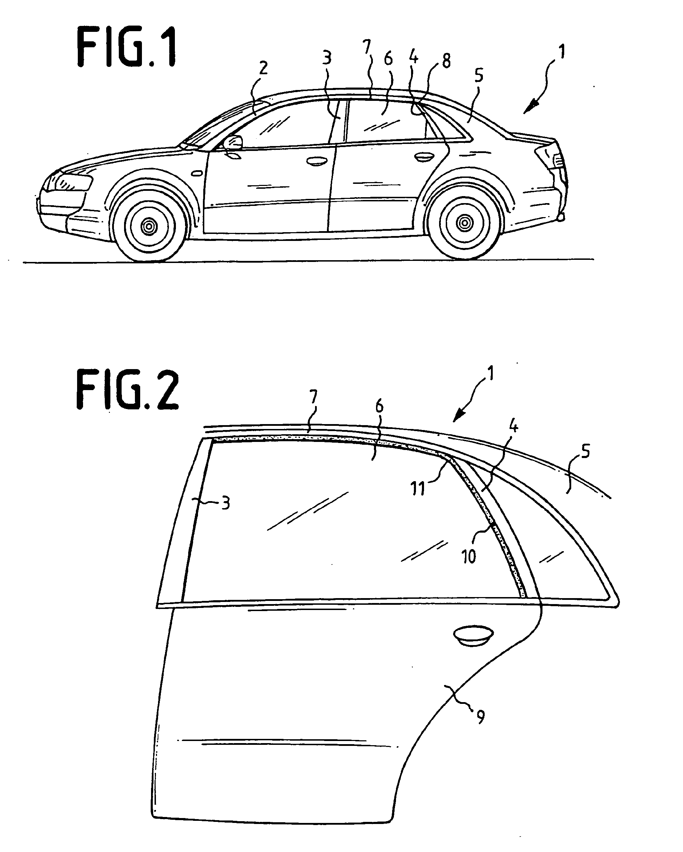

In der Fig. 1 ist ein Kraftfahrzeug 1 dargestellt, das eine A-Säule 2, eine B-Säule 3, eine C-Säule 4 und eine D-Säule 5 aufweist. Zwischen der B-Säule 3 und der C-Säule 4 befindet sich die hintere Scheibe 6, die an vier Seiten abgedichtet ist. Ein oberer Rahmenteil 7 und die C-Säule 4 schließen eine Ecke 8 ein, in der ein Dichtungsgummi nur schwer befestigbar ist.

Die Fig. 2 zeigt einen vergrößerten Ausschnitt aus Fig. 1, wobei die B-Säule 3, der obere Rahmenteil 7, die C-Säule 4, die D-Säule 5 und eine Tür 9 zu erkennen sind. Eine Rahmendichtung 10 umfasst hierbei das Fenster 6. Der kritische Bereich der Rahmendichtung ist die Ecke 11.

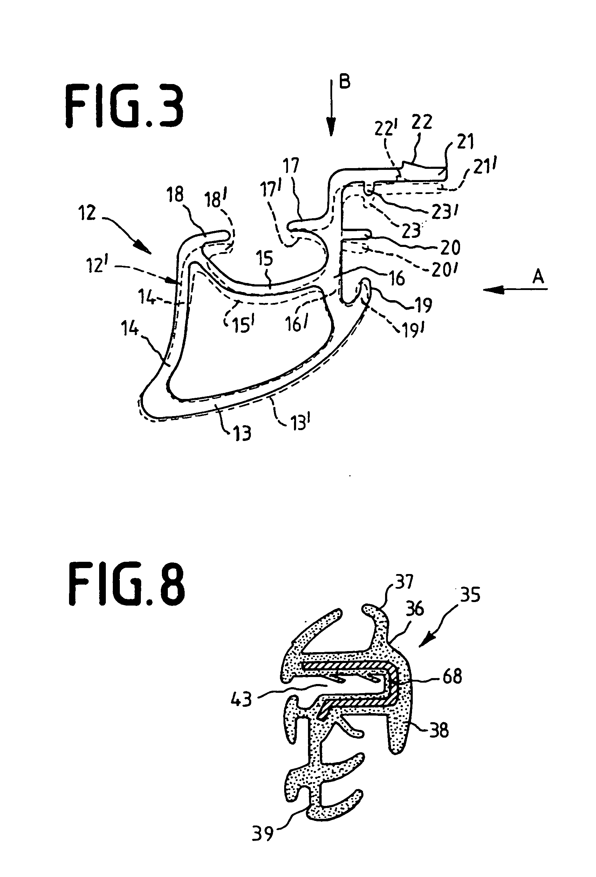

In der Fig. 3 ist das Profil eines Aggregatträgers 12 gezeigt, der mit dem Kraftfahrzeug 1 verbunden ist und in den die Rahmendichtung 10 eingepasst wird. Dieser Aggregatträger 12 weist einen unteren gekrümmten Steg 13 auf, an dessen einem Ende ein leicht nach innen gekrümmter Steg 14 anschließt. Oberhalb des Stegs 13 befindet sich ein weiterer Steg 15, an dessen rechtem Ende sich ein Steg 16 anschließt. Der Steg 15 bildet mit zwei nach innen gerichteten Vorsprüngen 17, 18 eine Nut. An der Verbindungsstelle zwischen den Stegen 13 und 16 ist eine nach oben gerichtete Nase 19 vorgesehen. Oberhalb dieser Nase 19 sind übereinander zwei nach links ausgerichtete Stege 20, 21 vorgesehen, wobei der obere und größere Steg 21 auf seiner Oberseite einen keilartigen Vorsprung 22 und auf seiner Unterseite einen leicht nach innen gerichteten kleinen Steg 23 aufweist.

Die ausgezogenen Linien stellen das Profil des Aggregatträgers 12 in einem geraden Bereich dar. Die gestrichelten Linien zeigen dagegen das Profil des gleichen Aggregatträgers im gekrümmten Bereich, also an der Ecke 11. Durch die Biegung des Aggregatträgers 12, die erforderlich ist, um diesen in die Ecke 11 einzupassen, geht der Aggregatträger von dem durch die ausgezogenen Linien dargestellten Bereich in den durch die gestrichelten Linien dargestellten Bereich über. Man erkennt hierbei, dass durch die Schrägstellung des Stegs 20 ein Festsitz der Fensterführungsdichtung verhindert wird, wenn diese mit dem Aggregatträger verbunden wird.

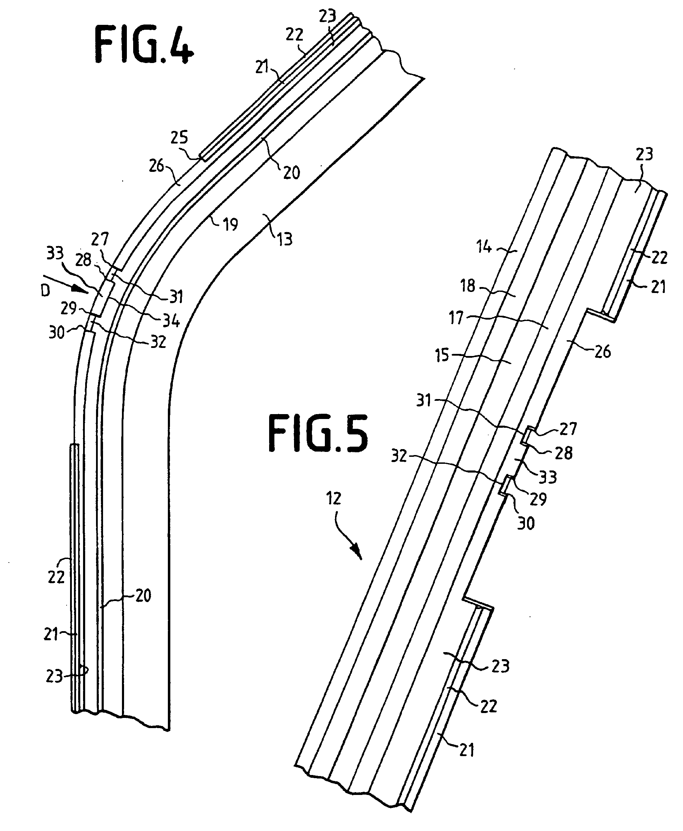

Die Fig. 4 zeigt eine Ansicht A auf den Aggregatträger 12 gemäß Fig. 3. Man erkennt aus dieser Darstellung, dass der Aggregatträger 12 für die Ecke 11 vorgesehen ist, weil er eine entsprechende Krümmung aufweist.

Der Steg 21 endet am Punkt 25. Auf der Höhe des Stegs 23 verläuft dann der Steg 26, bis dieser an der Stelle 27 unterbrochen wird und an der Stelle 28 weiter läuft, um dann an der Stelle 29 wieder unterbrochen zu werden und an der Stelle 30 auf der Höhe des Stegs 23 weiterzulaufen. Durch die hierdurch entstehenden beiden Einkerbungen 31, 32 entsteht ein Vorsprung 33 mit einer Nase 34.

In der Fig. 5 ist eine Ansicht B gezeigt, bei welcher die Krümmung nicht zu erkennen ist. Der mittlere Bereich des Aggregatträgers 12 liegt jedoch höher als seine beiden Enden.

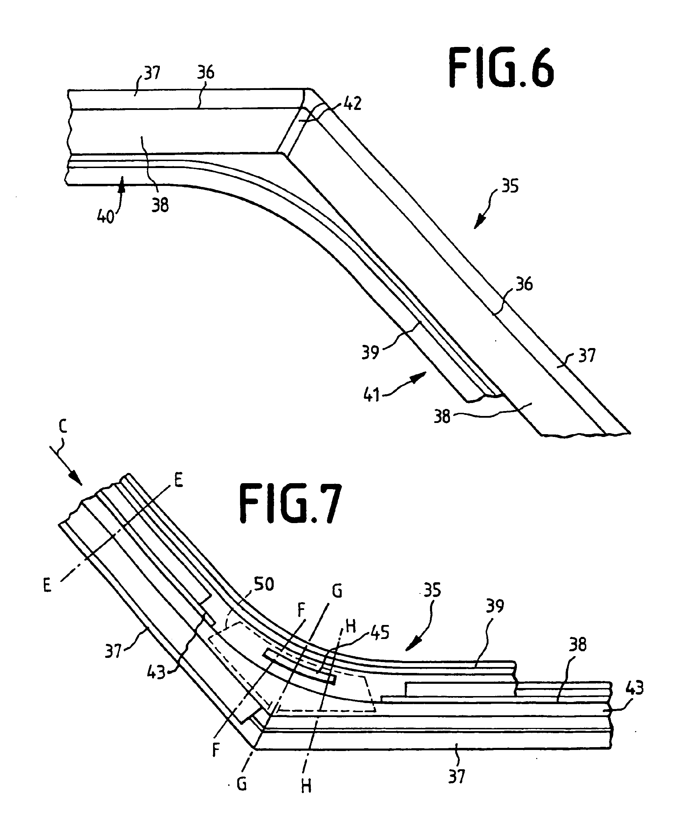

Die Fig. 6 zeigt die Außenseite eines Stücks einer Gummidichtung 35, die in den Aggregatträger 12 durch Einclipsen eingepasst werden kann. Die hier dargestellte Gummidichtung 35 besteht aus zwei in einem Winkel zueinander verlaufenden Dichtungsteilen 40, 41, die an einer Stelle 42 miteinander verbunden sind. In der Ansicht der Fig. 6 sind beide Dichtungsteile 40, 41 gleich aufgebaut. Sie weisen zwei nur durch eine Vertiefung 36 getrennte Bereiche 37, 38 auf, an die sich eine Lippe 39 anformt.

Dreht man die Gummidichtung 35 gemäß Fig. 6 um 180 Grad um die Längsachse des Dichtungsteils 41, so ergibt sich die Darstellung der Fig. 7.

Man erkennt hierbei, dass ein Vorsprung 45 aus der Gummidichtung 35 hervorragt. Dieser Vorsprung ist Teil eines in die Gummidichtung integrierten Einlegers.

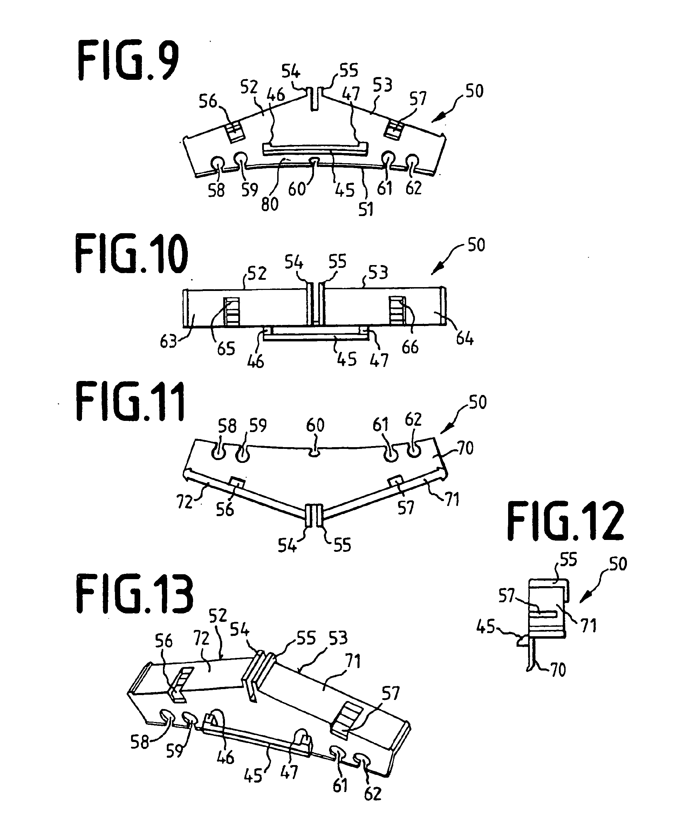

In der Fig. 8 ist eine Ansicht C auf das freie Ende des Bereichs 37 gezeigt. Man erkennt hierbei, dass in die Gummidichtung 35 ein U-förmiges Metallteil 68 eingearbeitet ist, das der Gummidichtung 35 die nötige Stabilität verleiht.

In den Fig. 9 bis 12 sind verschiedene Ansichten eines Einlegers 50 gezeigt, der den Vorsprung aufweist.

Die Fig. 9 zeigt eine Draufsicht auf den Einleger 50, aus der man den Steg 45 des Vorsprungs erkennt. Dieser Steg 45 ist leicht gekrümmt, wie auch die Unterkante 51 des Einlegers 50. Zwei schräg aufeinander zulaufende Kanten 52, 53 enden in vertikalen Vorsprüngen 54, 55. Diese Vorsprünge stellen Aussparungen bei der Einlegerfertigung dar, um den Einleger in sich beweglicher zu gestalten, d. h. bei Toleranzen in einem Aggregatträger kann sich der Einleger etwas besser anpassen und ist nicht zu starr. An einer unteren Front 80, auf der sich der Vorsprung 45 befindet, sind zwei obere Ausnehmungen 56, 57 und fünf untere Ausnehmungen 58 bis 62 vorgesehen. Der Steg 45 hat über Seitenstege 46, 47 einen Abstand vom restlichen Körper des Einlegers. Steg 45 und Seitenstege 46, 47 bilden zusammen eine Art Bügel.

Die Ausnehmungen 58 bis 62 bzw. 56, 57 sorgen dafür, dass beim Einvulkanisieren des Einlegers 50 in den Gummi dieser dort eine bessere Haftung hat.

Die Fig. 10 zeigt den gleichen Einleger 50 wie Fig. 9, jedoch in einer Ansicht von oben. Man erkennt hierbei, das in den Flächen 63, 64 Vertiefungen 65, 66 vorgesehen sind. Die Seitenstege 46, 47 sind hier noch deutlicher zu erkennen.

Während der Einleger bei Fig. 10 gegenüber Fig. 9 um 90 Grad gedreht ist, ist er in Fig. 11 um 180 Grad um seine Längsachse gedreht. Man erkennt hierbei wieder die Öffnungen 56, 57. Außerdem ist zu erkennen, dass der Einleger 50 einen L-förmigen Querschnitt mit den Schenkeln 70, 71 bzw. 70, 72 hat. Der Schenkel 70 entspricht dabei der Rückseite der Front 80 von Fig. 9.

Die Seitenansicht der Fig. 12 zeigt die Schenkel 70, 71 noch einmal deutlicher.

Eine perspektivische Ansicht des Einlegers 50 ist in der Fig. 13 gezeigt.

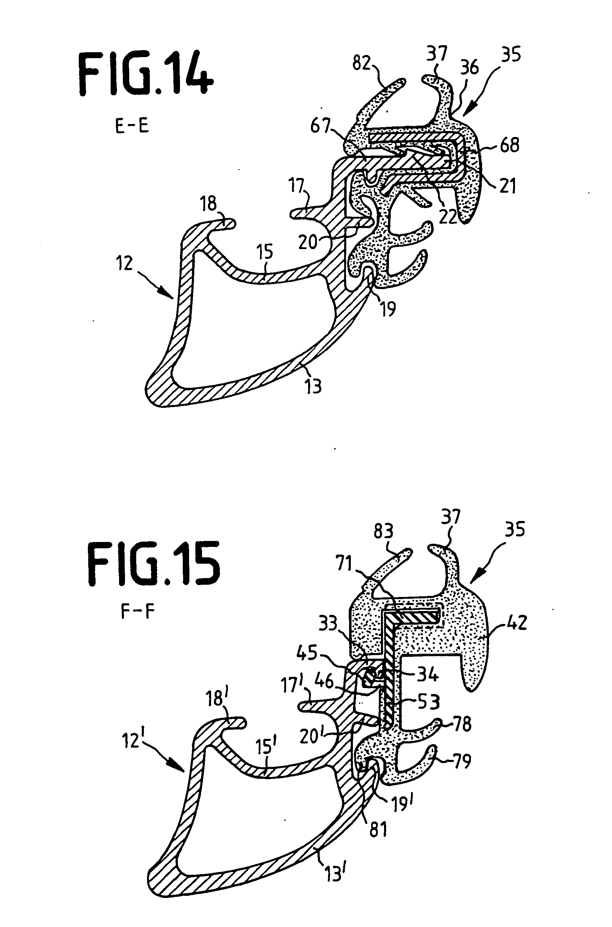

Fig. 14 zeigt die Verbindung zwischen dem Aggregatträger 12 und der Gummidichtung gemäß Fig. 6 bis 8, und zwar im geraden Bereich. Es handelt sich hierbei um einen Schnitt E-E gemäß Fig. 7.

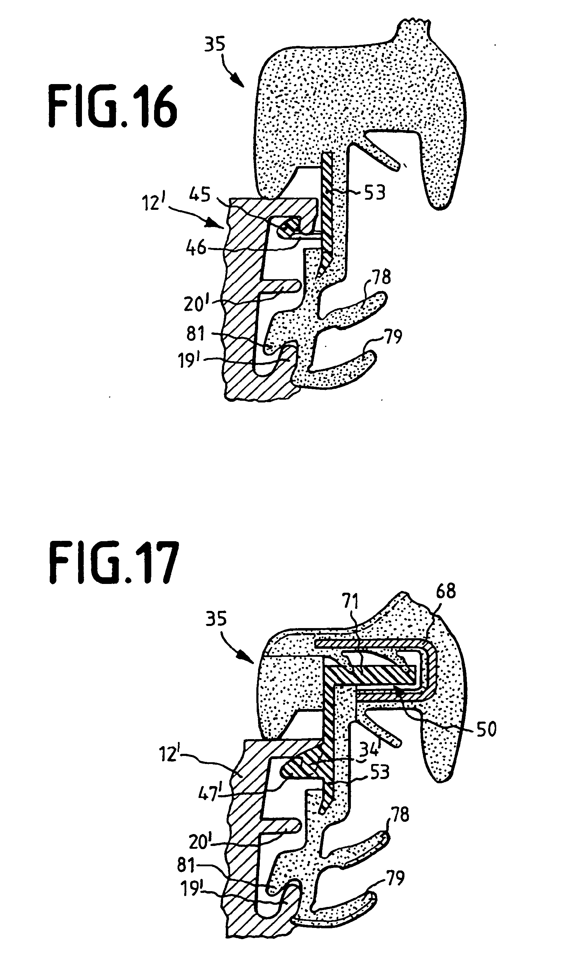

Die gleiche Verbindung zeigt Fig. 15 noch einmal, jedoch im gekrümmten Bereich, gemäß Schnitt G-G in Fig. 7. Man erkennt insbesondere einen Seitensteg 46 und den geschnittenen Steg 45. Dieser Steg ist leicht nach rechts gekrümmt und untergreift die Nase 34 des Vorsprungs 33 des Aggregatträgers.

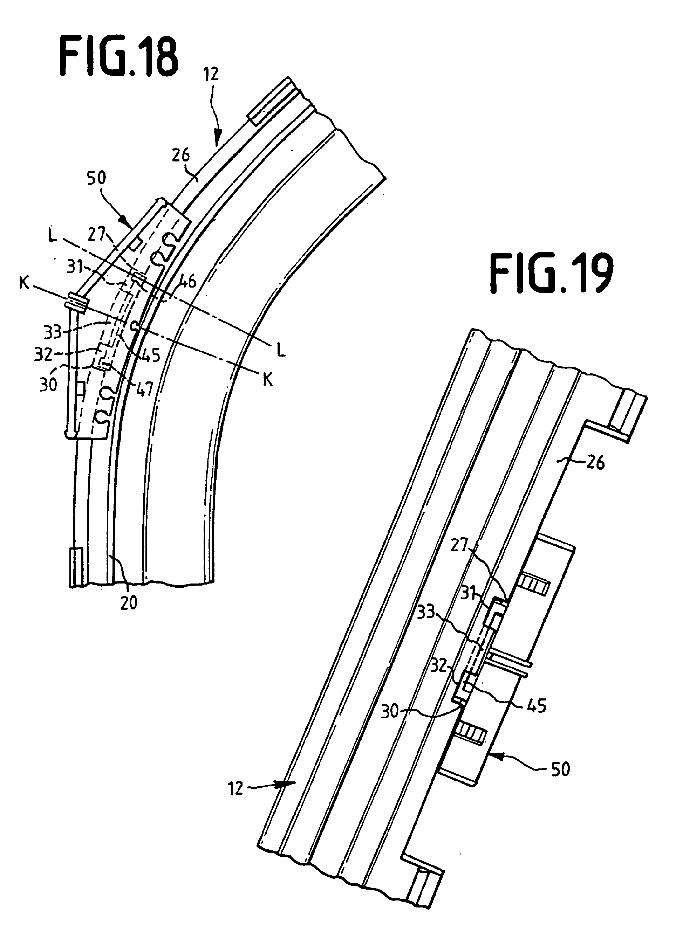

Fig. 16 zeigt den für die Erfindung relevanten Bereich noch einmal in vergrößerter Darstellung. Es handelt sich hierbei um einen Schnitt K-K gemäß der nachfolgenden Fig. 18. Die Nase 34 des Aggregatträgers 12 und der Steg 45 liegen mit ihren jeweils gegensätzlich verlaufenden Schrägen aufeinander. Hierdurch entsteht eine Keilwirkung, die ein Abziehen der Dichtung verhindert. Die gestrichelten Bezugszahlen weisen auf den verformten Zustand des Aggregatträgers hin, während die nicht gestrichelten Bezugszahlen auf den nicht verformten Zustand des Aggregatträgers hinweisen.

In Fig. 17 ist ein Schnitt L-L gemäß Fig. 18 dargestellt.

Die Fig. 18 zeigt den Einleger 50 in Verbindung mit dem Aggregatträger 12. Die Gummidichtung, in welcher der Einleger 50 eingebettet ist, ist hierbei weggelassen. Greift an dem Einleger eine Kraft von außen an - etwa weil ein Dieb die Gummidichtung lösen will -, so wirkt diese Kraft gleichmäßig auf den Steg 45, der sich dann umso fester unter die Nase 34 des Vorsprungs 33 schiebt. Auch ein Kippmoment wird dadurch, dass die Kraft nur in einer Linie angreift, vermieden.

In der Fig. 19 sind der Einleger 50 und der Aggregatträger 12 noch einmal in einer anderen Ansicht dargestellt.

Die Darstellung des Aggregatträgers 12 in den Fig. 18 und 19 korrespondiert zu der Darstellung in den Fig. 4 und 5.

Es versteht sich, dass bei längerem Aggregatträger nicht nur ein erfindungsgemäßer Einleger vorgesehen sein kann, sondern auch zwei oder drei. Dann muss an dem Aggregatträger an den entsprechenden Stellen eine Aussparung getroffen werden, die zum Hinterhaken der Einleger dient.

Wesentlich ist, dass bei der Erfindung nur ein Hintergreifen erfolgt und keine Gegenlagerung an einem Schenkel des Aggregatträgers.

## Patentansprüche

1. Einleger (50) für eine Kraftfahrzeug-Fensterdichtung, der mit einem am Kraftfahrzeug befindlichen Profil (12) verrastbar ist, wobei dieses Profil wenigstens eine Nase (34) aufweist, **dadurch gekennzeichnet, dass** etwa in der Mitte des Einlegers (50) ein bügelähnlicher Vorsprung vorgesehen ist, der zwei Seitenstege (46, 47) und einen diese verbindenden Steg (45) aufweist.

2. Einleger nach Anspruch 1, **dadurch gekennzeichnet, dass** der verbindende Steg (45) leicht gekrümmt ist.

3. Einleger nach Anspruch 1, **dadurch gekennzeichnet, dass** er eine Grundfläche (70) aufweist, die von einer gekrümmten Unterseite (51) und zwei in einem Winkel zueinander verlaufenden Stegen (71, 72) begrenzt ist.

4. Einleger nach Anspruch 3, **dadurch gekennzeichnet, dass** an der gekrümmten Unterseite (51) Aussparungen (58 - 62) vorgesehen sind.

5. Einleger nach Anspruch 3, **dadurch gekennzeichnet, dass** an den in einem Winkel zueinander verlaufenden Seiten Aussparungen (57, 56) vorgesehen sind.

6. Einleger nach Anspruch 1, **dadurch gekennzeichnet, dass** er im Querschnitt die Form eines L besitzt, wobei der eine Schenkel des L durch eine Grundfläche (70) und der andere Schenkel des L durch Stege (71, 72) gebildet wird, die senkrecht auf der Grundfläche (70) stehen und gegenüber einer gekrümmten Unterseite (51) des Einlegers angeordnet sind.

7. Einleger nach Anspruch 6, **dadurch gekennzeichnet, dass** die Stege (71, 72) an den Stellen, wo ihre Enden einander gegenüber liegen, mit senkrecht verlaufenden und parallel zueinander angeordneten Stegen (54, 55) versehen sind.

8. Einleger nach Anspruch 1, **dadurch gekennzeichnet, dass** er in eine Gummidichtung (35) integriert ist.

9. Einleger nach Anspruch 2, **dadurch gekennzeichnet, dass** die Krümmung des verbindenden Stegs (45) der Krümmung einer Ecke (11) einer Umrahmung eines Kraftfahrzeug-Fensters (6) angepasst ist.

## Claims

1. An insert (50) for a motor vehicle window gasket that is adapted to be snap-fitted into a profile (12) located on said motor vehicle, said profile comprising at least one nose (34), **characterized in that** a baillike projection, which comprises two side webs (46, 47) and one web (45) connecting said two side webs together, is provided approximately in the center of said insert (50).

2. The insert as set forth in claim 1, **characterized in that** the connecting web (45) is slightly curved.

3. The insert as set forth in claim 1, **characterized in that** it comprises a base area (70) that is limited by a curved underside (51) and two webs (71, 72) disposed at an angle to each other.

4. The insert as set forth in claim 3, **characterized in that** recesses (58 - 62) are provided on the curved underside (51).

5. The insert as set forth in claim 3, **characterized in that** recesses (57, 56) are provided on the sides disposed at an angle to each other.

6. The insert as set forth in claim 1, **characterized in that** it is L-shaped in cross section, the one leg of the L being formed by a base area (70) and the other leg of the L by webs (71, 72) that are perpendicular to said base area (70) and are disposed opposite a curved underside (51) of said insert.

7. The insert as set forth in claim 6, **characterized in that**, on the sites where their ends are confronting each other, the webs (71, 72) are provided with webs (54, 55) that are perpendicular thereto and arranged parallel to each other.

8. The insert as set forth in claim 1, **characterized in that** it is integrated in a rubber gasket (35).

9. The insert as set forth in claim 2, **characterized in that** the curvature of the connecting web (45) matches the curvature of a corner (11) of a frame around a motor vehicle window (6).

## Revendications

1. Insert (50) pour joint de fenêtre de véhicule automobile, du type encliquetable dans un profil (12) situé sur le véhicule automobile, ce profil comportant au moins un ergot (34), **caractérisé en ce qu'**une saillie en forme d'étrier et comportant deux parties latérales (46, 47) et une partie (45) reliant celles-ci est prévue environ au centre de l'insert (50).

2. Insert selon la revendication 1, **caractérisé en ce que** la partie (45) de liaison est légèrement incurvée.

3. Insert selon la revendication 1, **caractérisé en ce qu'**il comporte une surface de base (70) délimitée par une face inférieure (51) incurvée et par deux parties (71, 72) disposées de manière à former un angle entre elles.

4. Insert selon la revendication 3, **caractérisé en ce que** des découpes (58 - 62) sont prévues sur la face inférieure (51) incurvée.

5. Insert selon la revendication 3, **caractérisé en ce que** des découpes (57, 56) sont prévues sur les faces formant un angle entre elles.

6. Insert selon la revendication 1, **caractérisé en ce qu'**il a une section transversale en forme de L, l'une des branches du L étant formée par une surface de base (70) et l'autre branche du L par des parties (71, 72) qui sont perpendiculaires à la surface de base (70) et sont disposées en regard d'une face inférieure (51) incurvée de l'insert.

7. Insert selon la revendication 6, **caractérisé en ce que**, aux endroits où leurs extrémités sont situées en regard l'une de l'autre, les parties (71, 72) sont munies de parties (54, 55) perpendiculaires, parallèles entre elles.

8. Insert selon la revendication 1, **caractérisé en ce qu'**il est intégré dans un joint en caoutchouc (35).

9. Insert selon la revendication 2, **caractérisé en ce que** la courbure de la partie (45) est adaptée à la courbure d'un coin (11) d'un encadrement d'une fenêtre (6) de véhicule automobile.
